# EUROPÄISCHE PATENTSCHRIFT

(11) **EP 2 765 445 B1**
(45) Veröffentlichungstag und Bekanntmachung des Hinweises auf die Patenterteilung: **05.02.2020**
(21) Anmeldenummer: 13196842.2
(22) Anmeldetag: 12.12.2013
(51) Int. Cl.: G02B 19/00, F21V 5/04

(54) **LED-Einheit mit Linse**
LED unit with lens
Unité à LED avec lentille

(30) Priorität: 08.02.2013 DE 102013202082
(43) Veröffentlichungstag der Anmeldung: 13.08.2014
(73) Patentinhaber: Tridonic Jennersdorf GmbH, 8380 Jennersdorf (AT)
(72) Erfinder: Dobos, Janos, 9700 Szombathely (HU)
(74) Vertreter: Rupp, Christian

(56) Entgegenhaltungen:
- CN-A- 102 818 216
- US-A1- 2007 268 722
- US-A1- 2008 158 875
- US-A1- 2010 110 695
- US-A1- 2011 279 751

## Beschreibung

Die vorliegende Erfindung betrifft eine LED-Einheit mit einer Linse für eine lichtemittierende Diode bzw.

Leuchtdiode ("LEDs") und eine Linse für solche LED-Einheiten. Ferner betrifft die Erfindung eine Anordnung von LED-Einheiten in Form einer LED-Kette.

LED-Einheiten aufweisend eine Linse sind aus dem Stand der Technik allgemein bekannt. Aus der WO 2012/022760 A1 ist beispielsweise ein gehaustes LED-Modul bekannt, dessen Gehäuse einen im Wesentlichen optisch durchlässigen Bereich aufweist, um das Abstrahlen von Licht der LED nach außen zu ermöglichen. Der optisch durchlässige Bereich ist als Linse ausgebildet, insbesondere derart, dass sich der Bereich der wenigstens einen LED über die Oberflächenkontur des Gehäuses hinauswölbt.

Aus der EP 2 672 310 A1 ist eine Linse für ein LED-Modul bekannt.

Aus der US 2011/0279751 A1 ist eine Linse für eine Flüssigkristall-Anzeigevorrichtung bekannt.

Aus der US 2008/0158875 A1 ist eine Linse für eine Flüssigkristall-Anzeigevorrichtung bekannt.

Aus der US 2007/0268722 A1 ist eine Linse für eine punktförmige Lichtquelle wie eine LED bekannt.

Aufgabe der vorliegenden Erfindung ist es insbesondere, die Abstrahleigenschaften von LED-Einheiten zu verbessern. Insbesondere ist es die Aufgabe der Erfindung, eine Linsenform vorzuschlagen, die es ermöglicht, eine verringerte Bauteilgröße der Linse bei vergleichbarer oder sogar verbesserter Lichtabstrahlcharakteristik zu erzielen. Ziel ist es insbesondere bei gleichzeitiger Verringerung der Platzanforderungen der LED-Einheit eine gewünschte Lichtabstrahlcharakteristik zu erreichen.

Die Aufgabe wird durch die Merkmale der unabhängigen Patentansprüche gelöst. Die abhängigen Ansprüche bilden den zentralen Gedanken der Erfindung in vorteilhafter Weise weiter.

Gemäß einem Aspekt der Erfindung wird eine Linse vorgeschlagen für eine LED-Einheit mit einer oder mehreren LEDs, zur Verteilung des von der LED erzeugten Lichts, aufweisend eine Lichteinfallseite und eine Lichtausfallseite bezüglich der LED. Die Lichtausfallseite weist ausgehend von der optischen Achse der Linse sukzessiv einen konvexen Mittenbereich, einen konkaven

Zwischenbereich sowie einen konvexen Außenbereich auf.

Der im Wesentlichen konstante Krümmungsradius R7 des Mittenbereichs kann größer sein als der im Wesentlichen konstante Krümmungsradius R8 des Zwischenbereichs.

Die Lichteinfallseite kann ausgehend von der optischen Achse der Linse sukzessiv einen konkaven Mittenbereich und einen konvexen Zwischenbereich umfassen. Der konkave Mittenbereich der Lichteinfallseite kann mindestens einen Teilabschnitt aufweisen, dessen Tangente mit der optischen Achse der Linse einen spitzen Winkel α kleiner als 45° bildet.

Eine LED-Lichtstrahlung, die von einer sich auf der optischen Achse der Linse befindlichen Punktlichtquelle ausgeht, tritt bezüglich der optischen Achse mit einem Einfallwinkel auf die Lichteinfallseite und tritt mit einem Ausfallwinkel aus der Lichtausfallseite wieder aus. Gemäß einem weiteren Aspekt der Erfindung, ist die erfindungsgemäße Linse derart ausgestaltet, dass mit zunehmendem Einfallwinkel der Ausfallwinkel- in einem ersten Einfallwinkel-Bereich - zunächst ansteigt, dann - in einem zweiten Einfallwinkel-Bereich - abnimmt und vorzugsweise - in einem dritten Einfallwinkel-Bereich - wieder ansteigt.

Die Linse kann für ein LED-Bauteil, insbesondere für eine LED die, ein LED-Chip oder ein LED-Package (SMD LED) vorgesehen sein.

Die LED-Bauteile können eine kuppelartige Vergussmasse z.B. einen Globe-Top aufzeigen.

Die Linse kann für eine farbstoffkonvertierte blaue LED, die blaues und farbkonvertiertes, insbesondere gelbes/grünes/grün-gelbes, Licht erzeugt, vorgesehen sein.

Die Linse kann den Ausfallwinkel abhängig vom Einfallwinkel derart verändern, dass im ersten Einfallwinkel-Bereich einfallendes blaues Licht und im zweiten Einfallwinkel-Bereich einfallendes farbkonvertiertes Licht ausgangsseitig mischbar sind.

Die Linse kann aus einem transparenten Material bestehen.

Die Linse kann Streupartikel enthalten. Alternativ oder zusätzlich dazu kann die Linse frei von Farbkonversionsmaterial bzw. von Phosphormaterial sein.

Die Lichtausfallseite der Linse kann wenigstens teilweise mechanisch bearbeitet sein, beispielsweise aufgeraut.

Die Lichteinfallseite der Linse kann glatt oder mechanisch bearbeitet sein, beispielsweise aufgeraut.

Das LED-Bauteil wird insbesondere als Punktlichtquelle angesehen. Die von der Punktlichtquelle abgestrahlten Lichtstrahlen spannen idealerweise eine Halbkreisform auf.

Unter einer optischen Achse ist erfindungsgemäß eine Gerade zu verstehen, die mit der Symmetrieachse der Linse übereinstimmt, wobei die Gerade durch den Punkt eines als Punktlichtquelle anzusehenden LED-Bauteils verläuft. Entlang der optischen Achse wird insbesondere der größte Teil der Gesamtlichtleistung der LED pro Winkelbezug abgestrahlt.

Ein Lichtstrahl entlang und/oder parallel zur optischen Achse weist bezogen auf die Punktlichtquelle erfindungsgemäß einen Lichtabstrahlwinkel von 0° auf. Ein Lichtstrahl, der in einem von 0° verschiedenen Winkel ausgehend von der Punktlichtquelle abgestrahlt wird, weist einen positiven Winkelwert in Bezug zur optischen Achse auf, wenn er im mathematisch positiven Sinn von der optischen Achse gedreht wurde.

Gemäß einem weiteren Aspekt der Erfindung wird eine Linse vorgeschlagen, bei der der Abstand zwischen der Lichteinfallseite und der Lichtausfallseite der Linse im Bereich der optischen Achse am Geringsten ist.

Bevorzugt ist der Abstand zwischen der Lichteinfallseite und der Lichtausfallseite im Bereich der, zur optischen Achse orthogonalen Achse der Linse am Größten.

Insbesondere ist der Abstand zwischen der Lichteinfallseite und der Lichtausfallseite ausgehend vom Bereich der optischen Achse der Linse hin zur, der optischen Achse orthogonalen optischen Achse der Linse sukzessiv vergrößert.

Durch diese Ausgestaltung der Linse wird in vorteilhafter Weise erreicht, dass die in der Nähe der optischen Achse austretenden Lichtstrahlen stark abgelenkt werden, um eine Lichtverteilung zu erwirken. Die Lichtstrahlen, die einen geringen Winkelwert bezogen auf die optische Achse aufweisen, werden somit zweimal gebrochen, einmal an der Lichteinfallseite der Linse und einmal an der Lichtausfallseite der Linse. Die Lichtstrahlen, die einen größeren Winkelwert bezogen auf die optische Achse aufweisen, insbesondere in der Nähe der zur optischen Achse orthogonalen optischen Achse, weisen eine geringe Lichtstärke und eine zu den Lichtstrahlen in der Nähe der optischen Achse verschiedene optische Wellenlänge auf. Daher ist zu vermeiden, dass diese Lichtstrahlen durch Reflexionen an der Lichteinfallseite und der Lichtausfallseite der Linse zur optischen Achse hin gebrochen werden, was durch die beschriebene erfindungsgemäße Ausformung der Linse erreicht wird.

Die erfindungsgemäß vorzusehenden numerischen Werte können der Figurenbeschreibung und der Tabelle 1 entnommen werden. Diese Angaben sind als beispielhaft anzusehen.

Erfindungsrelevant ist darüber hinaus die Positionierung der erfindungsgemäßen Linse oberhalb des LED-Bauteils. Damit die bezweckte homogene Farbcharakteristik und/oder homogene Lichtverteilung erreicht wird, wird erfindungsgemäß vorgeschlagen, die optische Achse der Linse und die optische Achse des LED-Bauteils derart auszurichten, dass kein Versatz zwischen diesen optischen Achsen vorhanden ist, die optische Achse der Linse mit der optischen Achse des LED-Bauteils im Idealfall deckungsgleich ist.

Das optische Zentrum der lichtemittierenden Fläche des LED-Bauteils liegt bevorzugt auf der optischen Achse der Linse.

Die optische Achse des LED-Bauteils kann mit der geometrischen Achse übereinstimmen.

Gemäß einem weiteren Aspekt der Erfindung wird eine LED-Einheit vorgeschlagen aufweisend ein LED-Modul mit wenigstens einem darauf angeordneten LED-Bauteil aufweisend mindestens eine LED. Pro LED-Bauteil ist jeweils eine erfindungsgemäße Linse auf dem Träger derart angeordnet, dass zwischen dem LED-Bauteil und der jeweiligen Linse ein Innenraum gebildet ist.

Das LED-Bauteil kann ein LED-Package (SMD LED) oder eine LED mit einem Globe-Top ((dispensed) kuppelartige Vergussmasse) sein. Ein oder mehrere LED Chips/dies können in einem LED-Package oder unter einem (gemeinsamen) Globe-Top angeordnet sein.

Erfindungsgemäß deckt das LED-Package insbesondere höchstens 21%, bevorzugt höchstens 16% der Trägeroberfläche unterhalb der Linse ab.

Erfindungsgemäß deckt das Globe-Top insbesondere höchstens 66%, bevorzugt höchstens 50% der Trägeroberfläche unterhalb der Linse ab.

Mindestens ein LED-Bauteil der LED-Einheit kann eine blaue LED und Farbkonversionsmaterial aufweisen, so dass blaues und farbkonvertiertes Licht einer längeren Wellenlänge, beispielsweise gelbes/gelb-grünes/grünes Licht, auf die Lichteinfallseite der entsprechenden Linse trifft.

Bevorzugt weist die LED-Einheit ein Oberteil und ein Unterteil auf, wobei zwischen Oberteil und Unterteil ein LED-Modul angeordnet ist. Derartige LED-Einheiten lassen sich sehr vereinfacht und kostengünstig hergestellt werden.

Bevorzugt ist zumindest ein Positionierungselement vorgesehen, welches das LED-Modul derart positioniert, dass die optische Achse der zumindest einen Linse mit der optischen Achse des zumindest einen LED-Bauteil übereinstimmt. Auf diese Weise wird ein Ausrichten von LED-Bauteil und Linse erreicht, wodurch die homogene Lichtverteilung und die homogene Farbcharakteristik der LED-Einheit sichergestellt sind.

Insbesondere sind zumindest zwei Linsen vorgesehen, wobei die Linsen mittels einer Linsenbrücke optisch gekoppelt sind. Dadurch wird die Homogenität der Lichtverteilung zusätzlich gesteigert.

Bevorzugt sind zumindest drei Linsen vorgesehen, wobei zu jeder Linse ein LED-Bauteil auf dem Träger angeordnet ist und die Linsen entweder in Reihe nebeneinander angeordnet sind oder in einem Dreieck angeordnet sind.

Erfindungsgemäß ist weiterhin ein Oberteil für eine LED-Einheit vorgesehen, wobei das Oberteil zumindest drei Linsen gemäß vorhergehend beschriebener Art aufweist und wobei die Linsen entweder in Reihe nebeneinander angeordnet sind oder in einem Dreieck angeordnet sind. Durch diese Anordnung wird die Beleuchtungsstärke wesentlich erhöht, wobei eine homogene Lichtverteilung und eine homogene Farbcharakteristik erhalten bleiben oder gesteigert werden können.

Gemäß einem weiteren Aspekt der Erfindung wird eine Kettenanordnung vorgeschlagen. Die Kettenanordnung besteht aus mehreren miteinander verbundenen erfindungsgemäßen LED-Einheiten.

Gemäß einem weiteren Aspekt der Erfindung wird ein Lichtkasten vorgeschlagen, vorzugsweise zur Werbebeleuchtung, mit zumindest einer transparenten Frontseite. Der Lichtkasten wird durch wenigstens eine erfindungsgemäße LED-Einheit ausgeleuchtet.

Gemäß einem weiteren Aspekt der Erfindung wird ein Verfahren zum Herstellen einer LED-Einheit gemäß vorangehend beschriebener Art vorgeschlagen, wobei die LED-Einheit ein Oberteil mit zumindest einer Linse gemäß vorangehend beschriebener Art umfasst und ein LED-Modul mit zumindest einem LED-Bauteil aufweist. Das erfindungsgemäße Verfahren umfasst die Verfahrensschritte: Ausrichten des LED-Moduls derart, dass die optische Achse des LED-Bauteil mit der optischen Achse der Linse übereinstimmt und Positionieren des Oberteils auf dem LED-Modul. Damit ist die bezweckte homogene Farbcharakteristik und/oder homogene Lichtverteilung erreicht.

Insbesondere wird der Schritt des Ausrichtens mittels Positionierungselementen auf dem LED-Modul und/oder dem Oberteil erfolgen.

Insbesondere weist die LED-Einheit weiterhin ein Unterteil auf, wobei in dem Unterteil eine Unterteil-Kavität vorhanden ist und in die Unterteil-Kavität Stromleitungen zur Ansteuerung des LED-Bauteils eingebracht sind und wobei anschließend die Unterteil-Kavität vergossen wird. Dies ermöglicht eine stark vereinfachte Produktion der LED-Einheit und verringert Produktionskosten.

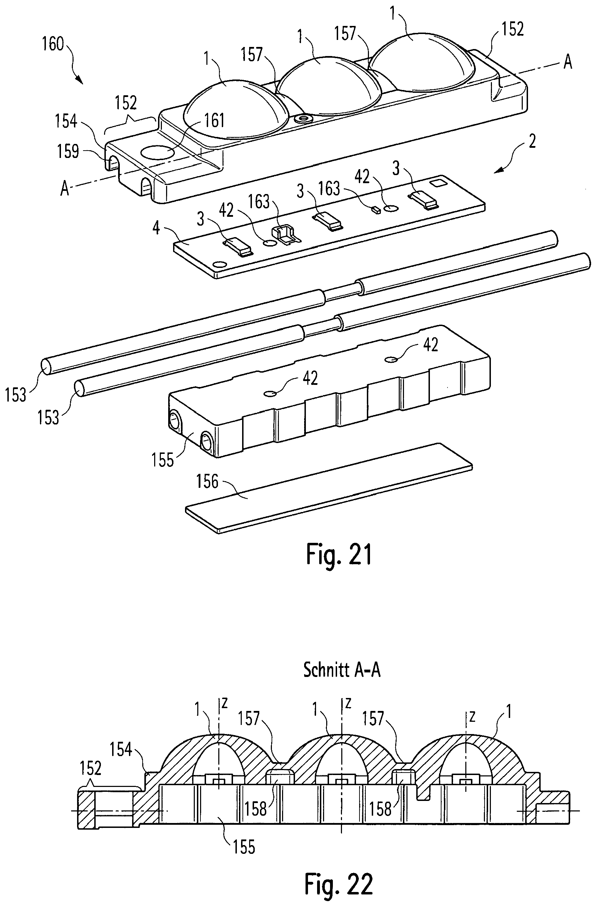

Weitere Vorteile, Merkmale und Eigenschaften der vorliegenden Erfindung sollen nunmehr Bezug nehmend auf die Figuren der begleitenden Zeichnungen näher erläutert werden. Mit Ausnahme der Fig. 22 bis Fig. 25 sind die Zeichnungen nicht als maßstabsgetreu anzusehen, verschiedene Elemente können übertrieben groß oder übertrieben vereinfacht dargestellt sein. Gleiche Bezugszeichen an Komponenten in unterschiedlichen Figuren bedeuten gleiche Funktionalität, Aufbau und/oder Struktur.
Fig. 1 zeigt dabei eine schematische Schnittansicht eines ersten Ausführungsbeispiels der erfindungsgemäßen Linse bzw. der erfindungsgemäßen LED-Einheit,
Fig. 2 zeigt eine schematische Schnittansicht des Strahlengangs des erfindungsgemäßen Ausführungsbeispiels aus Fig. 1,
Fig. 3 zeigt eine Seitenansicht der erfindungsgemäßen Linse,
Fig. 4a zeigt ein Ausführungsbeispiel eines LED-Packages,
Fig. 4b zeigt ein Ausführungsbeispiel einer LED mit Globe-Top
Figs. 5-9 und 18 zeigen Beleuchtungsstärke-Diagramme,
Fig. 10 zeigt ein erfindungsgemäßes Ausführungsbeispiel einer LED-Einheit zusammen mit Lichtstrahlen,
Fig. 11 ist eine Draufsicht einer LED-Einheit mit mehreren Linsen,
Fig. 12 zeigt das ausgehend von der LED-Einheit gemäß Fig. 11 erfasste Beleuchtungsstärke-Diagramm,
Figs. 13-14 zeigen die Abstrahlcharakteristik der LED-Einheit gemäß Fig. 11,
Fig. 15 zeigt eine Draufsicht einer erfindungsgemäßen Kettenanordnung,
Fig. 16 zeigt eine zu Fig. 1 alternative schematische Schnittansicht einer nicht erfindungsgemäßen Linse einer LED-Einheit,
Fig. 17 zeigt eine schematische Schnittansicht des Strahlengangs gemäß dem nicht erfindungsgemäßen Beispiel aus Fig. 16,
Fig. 19 zeigt die Abstrahlcharakteristik der LED-Einheit gemäß Fig. 16,
Fig. 20 zeigt die Ausrichtung und Positionierung der Linse auf dem LED-Modul oberhalb des LED-Packages,
Fig. 21 zeigt ein alternatives Ausführungsbeispiel der erfindungsgemäßen LED-Einheit gemäß Fig. 1 in 3D-Ansicht,
Fig. 22 zeigt die LED-Einheit gemäß Fig. 21 entlang einer ersten Schnittlinie A-A (in Seitenansicht),
Fig. 23 zeigt ein erfindungsgemäßes Oberteil der LED-Einheit gemäß Fig. 21 in Draufsicht,
Fig. 24 zeigt ein erfindungsgemäßes Oberteil der LED-Einheit gemäß Fig. 21 entlang in Untersicht, und
Fig. 25 zeigt das Oberteil gemäß Fig. 24 in Innenansicht.

Allgemein bezieht sich die Erfindung auf eine LED-Einheit, in der ein oder mehrere LEDs (LED-Bauteilen) auf einem LED-Modul angeordnet sind. Für jede LED-Bauteil ist vorzugsweise eine Linse vorgesehen. Der Begriff LED soll indessen auch OLEDs umfassen.

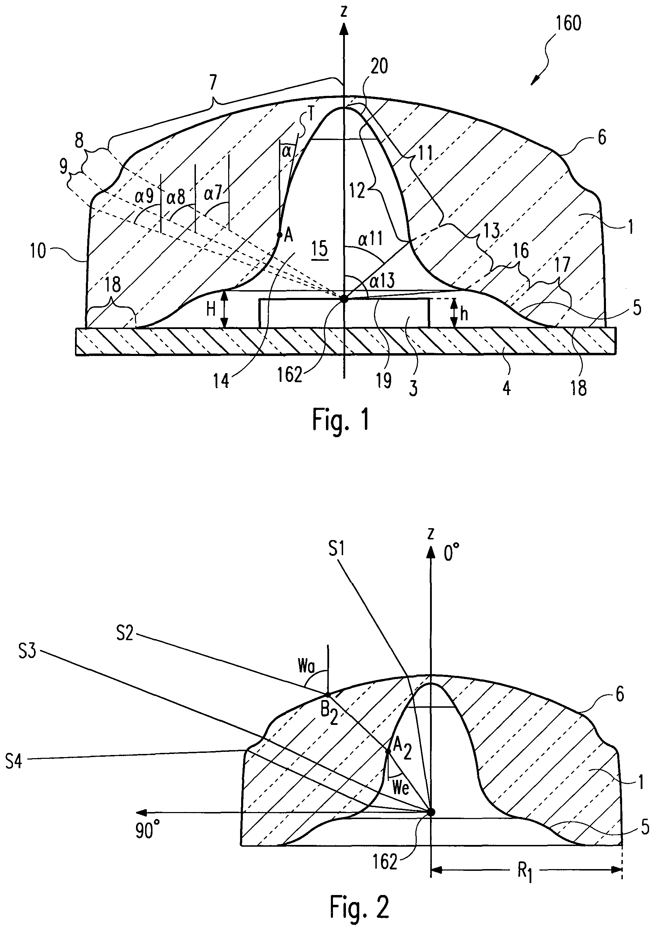

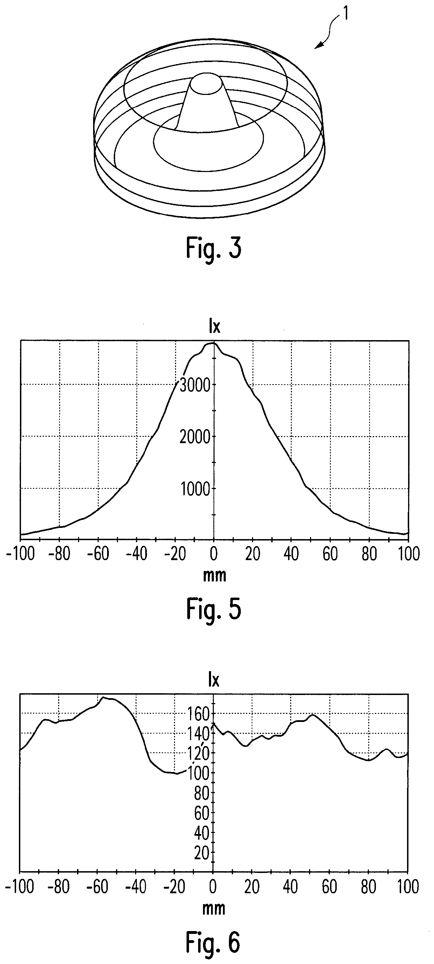

Fig. 1 zeigt nunmehr eine Schnittansicht eines ersten Ausführungsbeispiels eines erfindungsgemäßen LED-Moduls mit einem LED-Package bzw. mit einer LED. Die LED-Einheit 160 umfasst eine Linse 1, ein LED-Bauteil bzw. ein LED-Package 3, und einen Träger 4. Eine Seitenansicht der Linse 1 ist in Fig. 3 gezeigt. Die LED bzw. das LED-Package 3 sowie die Linse 1 sind auf dem Träger 4 in an sich bekannter Weise aufgebracht bzw. angeordnet.

In der Schnittansicht gemäß Fig. 1 ist die optische Achse z der Linse 1 dargestellt. Die optische Achse z ist vorzugsweise eine Symmetrie-Achse der Linse 1 bzw. die zentrale Symmetrie-Achse der Linse 1. Die Richtung der optischen Achse z entspricht der Abstrahlrichtung der LED. Die im Rahmen der Erfindung definierten Richtungsangaben wie beispielsweise "auf" oder "über" sind in Bezug auf die in Fig. 1 gezeigte gerichtete optische Achse z, d.h. in Bezug auf die Abstrahlrichtung, zu verstehen.

Die Linse 1 dient zur Streuung bzw. zur Verteilung der von der LED emittierten Lichtstrahlung. Die Linse 1 ist hierzu unter Beibehaltung eines Innenraums bzw. eines Hohlraums 15 oberhalb der LED bzw. des LED-Packages 3 angeordnet. Das von der LED emittierte Licht tritt vorzugsweise durch eine Oberseite 19 der LED bzw. des LED-Packages 3 in den Innenraum 15 ein, bevor es auf eine Lichteinfallseite 5 der Linse 1 trifft. Diese Oberseite 19 definierte vorzugsweise eine Ebene, die senkrecht zur optischen Achse z ist.

Eine erste Brechung des einfallenden Lichtstrahls findet an dieser Lichteinfallseite 5 bzw. an der Innenseite des Innenraums der Linse 1 statt. Wie in Fig. 2 gezeigt, erfolgt diese erste Brechung beispielsweise an einem Punkt A2 der Lichteinfallseite 5. Der Strahlengang tritt dann durch das Material der Linse 1 - z.B. Kunststoff - durch, und wird beim Austritt aus einer Lichtausfallseite 6 der Linse 1 ein zweites Mal gebrochen. Diese zweite Brechung findet in Fig. 2 beispielsweise an einem Punkt B2 statt. In Fig. 2 sind vier beispielhafte Strahlengänge S1, S2, S3, S4 mit jeweils zwei Brechungen dargestellt.

Die Lichtausfallseite 6 weist verschiedene Bereiche auf, die z.B. durch ihre Wölbung und ihren Krümmungsradius gekennzeichnet werden können. Ein Mittenbereich bzw. Mittelbereich 7 der Lichtausfallseite 6 erstreckt sich kreisförmig ausgehend von der optischen Achse z. Die optische Achse z stellt eine Symmetrie-Achse des Mittenbereichs 7 dar. Der Mittenbereich 7 ist konvex und definiert so einen nach außen gewölbten Bereich der Lichtausfallseite 6.

Der Mittenbereich 7 weist vorzugsweise eine gleichmäßige Krümmung, d.h. einen konstanten Krümmungsradius R7, auf. Der Krümmungsradius R7 des Mittenbereichs 7 kann auch im Wesentlichen konstant sein, d.h. über die gesamte Fläche des Mittenbereichs 7 bleibt der Krümmungsradius innerhalb eines Toleranzbereichs von z.B. +-15%, +-10% oder vorzugsweise +-5% oder +-3% um den Wert R7. Diese Definition eines im Wesentlichen konstanten Krümmungsradius gilt im Rahmen der Erfindung auch für die anderen Bereiche der Linse 1. Im Ausführungsbeispiel der Fig. 1 weist der Mittenbereich 7 einen im Wesentlichen konstanten Krümmungsradius R7 = 10/6 ^{∗} R1, wobei R1, wie in Fig. 2 dargestellt, der Radius der Linse 1 ist. Vorzugsweise gilt R7 > R1.

In Fig. 1 ist ein Punkt 162 derart definiert, dass er den Schnittpunkt der optischen Achse z mit der Oberseite 19 des LED-Packages 3 bildet. Der Punkt 162 ist das optische Zentrum der lichtemittierende Fläche des LED-Packages 3. Im Ausführungsbeispiel der Fig. 1 und ausgehend vom Punkt P erstreckt sich der Mittenbereich 7 von der optischen Achse z bis zu einem Winkel α7, der vorzugsweise 60° betragen kann. Dieser Winkel α7 ist vorzugsweise ein spitzer Winkel größer als 45°.

An den Mittenbereich 7 angrenzend weist die Lichtausfallseite 6 einen Zwischenbereich 8 auf. Im Gegensatz zum Mittenbereich 7 ist der Zwischenbereich 8 konkav, d.h. der Zwischenbereich 8 bildet eine nach innen gewölbte Linsenoberfläche. Der im Wesentlichen konstante Krümmungsradius R8 des Zwischenbereichs 8 ist vorzugsweise kleiner als der Krümmungsradius R7. In einem Ausführungsbeispiel kann z.B. gelten R8 < 1/2 ^{∗} R7, vorzugsweise R8 < 1/3 ^{∗} R7 oder R8 < 1/4 ^{∗} R7. Andererseits ist der Wert R8 vorzugsweise größer als ein Zehntel des Krümmungsradius R7.

Ausgehend vom Punkt P erstreckt sich der Zwischenbereich 8 vom zuvor definierten Winkel α7 bis zu einem Winkel α8 bezüglich der optischen Achse z. Der Winkel α8 ist also größer als der Winkel α7. Die Differenz α8- α7 ist vorzugsweise kleiner als a7. Noch bevorzugter gilt α8- a7 < 1/2 ^{∗} α7, oder a8- α7 < 1/4 ^{∗} α7, oder α8- α7 < 1/6 ^{∗} α7. Im Ausführungsbeispiel der Fig. 1 gilt z.B. α8- α7 = 10°.

Die Lichtausfallseite 6 weist einen konvexen Außenbereich 9 auf, der angrenzend an den Zwischenbereich 8 angeordnet ist. Der Außenbereich 9 erstreckt sich nach außen hin, d.h. weg von der optischen Achse z. In einer Draufsicht auf die Linse 1 ist der Außenbereich 9 also um den Zwischenbereich 8 angeordnet, der wiederum um den Mittenbereich 7 angeordnet ist.

Der im Wesentlichen konstante Krümmungsradius R9 des Außenbereichs 9 ist vorzugsweise kleiner als R8 und kleiner als R7. Der Wert R9 kann vorzugsweise ein Zehntel bzw. ungefähr ein Zehntel des Krümmungsradius R7 betragen, oder R9 kann kleiner sein als ein Zehntel des Krümmungsradius R7.

Ausgehend vom Punkt P erstreckt sich der Außenbereich 9 vom zuvor definierten Winkel α8 bis zu einem Winkel α9 bezüglich der optischen Achse z. Der Winkel α9 ist größer als der Winkel α8. Die Differenz α9- α8 entspricht vorzugsweise der Differenz α8- α7. Alternativ kann die Differenz α9- a8 kleiner sein als die Differenz α8- α7.

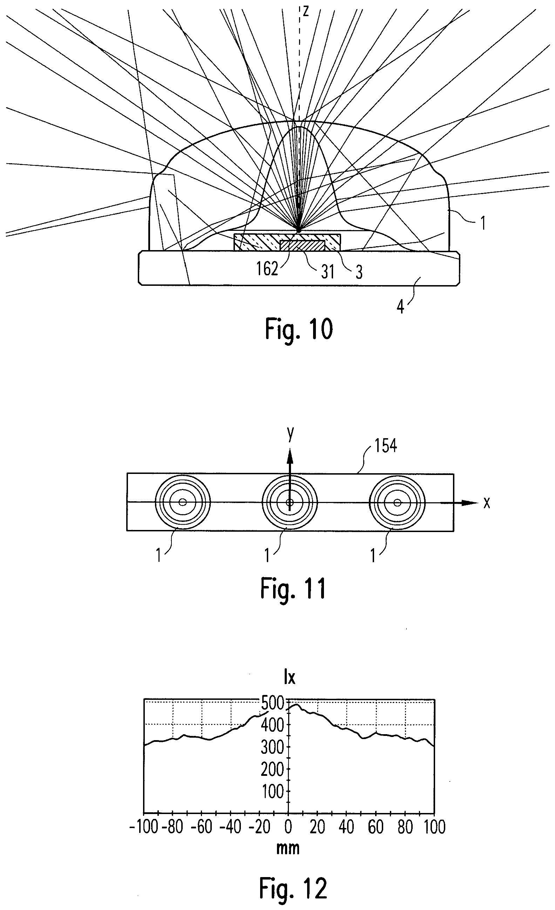

Die Lichtausfallseite 6 kann weiterhin einen im Wesentlichen parallel zur optischen Achse z angeordneten Seitenbereich 10 aufweisen, der an den Außenbereich 9 angrenzt. Der Seitenbereich 10 führt die Lichtausfallseite 6 bis zum Träger 4. Indessen ist es nicht notwendig, dass ein von der LED emittierter Lichtstrahl aus diesem Seitenbereich 10 austritt, wie es z.B. aus Fig. 10 ersichtlich ist. Der Seitenbereich 10 kann somit für den Lichtstrahl als nicht-transparent ausgestaltet sein.

Wie aus Fig. 1 ersichtlich, weist die Lichteinfallseite 5 der Linse 1 ebenfalls verschiedene Bereiche auf. In der Mitte der Lichteinfallseite 5 ist ein konkaver Mittenbereich bzw. Mittelbereich 11 vorgesehen.

Wie in Fig. 1 gezeigt, erstreckt sich der konkave Mittenbereich 11 ausgehend vom Punkt P von der optischen Achse z bis zu einem Winkel α11, der 45° betragen kann. Vorzugsweise kann der Winkel α11 im Bereich 40°-50° oder im Bereich 35°-55° sein.

Der Mittenbereich 11 besteht vorzugsweise aus einer oberen zentralen Kalotte 20 und einem angrenzenden, nach unten verlaufenden seitlichen Teilabschnitt 12. Der Teilabschnitt ist dadurch definiert, dass jeder Punkt A des Teilabschnitts 12 eine Tangente T aufweist, die mit der optischen Achse z einen spitzen Winkel α bildet, der kleiner als oder gleich 45° ist, s. Fig. 1. Vorzugsweise kann der Mittenbereich 11 einen noch steileren Teilabschnitt 12 umfassen mit einem entsprechenden Winkel α kleiner als 40°, kleiner als 30°, kleiner als 20°, kleiner als 10° oder kleiner als 5°.

Der in Fig. 1 dargestellte Teilabschnitt 12 des Mittenbereichs 11 weist z.B. einen im Wesentlichen konstanten Krümmungsradius R12 auf. Vorzugsweise ist R12 kleiner als R7 und größer als R8.

An den Mittenbereich 11 grenzt nach außen ein konvexer Zwischenbereich 13 der Lichteinfallseite 5 an. Dieser Zwischenbereich 13 weist vorzugsweise einen im Wesentlichen konstanten Krümmungsradius R13 auf, welcher vorzugsweise kleiner ist als der Krümmungsradius R12. In einem Ausführungsbeispiel kann z.B. gelten R13 < 1/2 ^{∗} R12, vorzugsweise R13 < 1/3 ^{∗} R12 oder R13 < 1/4 ^{∗} R12. Andererseits ist der Wert R13 vorzugsweise größer als ein Zehntel des Krümmungsradius R12.

Ausgehend vom Punkt P erstreckt sich der Zwischenbereich 13 vom zuvor definierten Winkel α11 bis zu einem Winkel α13 bezüglich der optischen Achse z. Der Winkel α13 ist größer als der Winkel α11. Vorzugsweise beträgt der Winkel α13 90° oder annähernd 90°. Der Winkel α13 kann insbesondere im Bereich 85°-95° oder im Bereich 80°-10Ö° sein. Somit trifft der Großteil des durch die Oberseite 19 der LED bzw. des LED-Packages 3 emittierten Lichts auf den Mittenbereich 11 oder auf den Zwischenbereich 13 der Lichteinfallseite 5, wie es z.B. in auf Fig. 10 gezeigt ist.

An den Zwischenbereich 13 grenzt ein konkaver, erster Außenbereich 16 der Lichteinfallseite 5, gefolgt von einem konvexen, zweiten Außenbereich 17 der Lichteinfallseite 5.

Ein Unterbereich 18 der Linse 1 ist mit dem Träger 4 in bekannter Weise, z.B. durch Verkleben, verbunden. Dieser Unterbereich 18 ist vorzugsweise flach und grenzt einerseits an den Seitenbereich 10 der Lichtausfallseite 6 und andererseits an den zweiten Außenbereich 17 der Lichteinfallseite 5 an.

Die Lichteinfallseite 5 bildet insgesamt eine Aussparung oder Vertiefung 14 in der Linse. Diese Aussparung ist so ausgestaltet, dass zwischen dem LED-Package 3 und der Linse 1 ein Innenraum bzw. Hohlraum 15 entsteht. Die Höhe H des ersten Außenbereichs 16 und des zweiten Außenbereichs 17 in Abstrahlrichtung, d.h. bezüglich der optischen Achse z, ist vorzugsweise größer als die Höhe h des LED-Packages 3, so dass genug Freiraum entsteht, um das LED-Package 3 wie gewünscht auf dem Träger 4 zu platzieren.

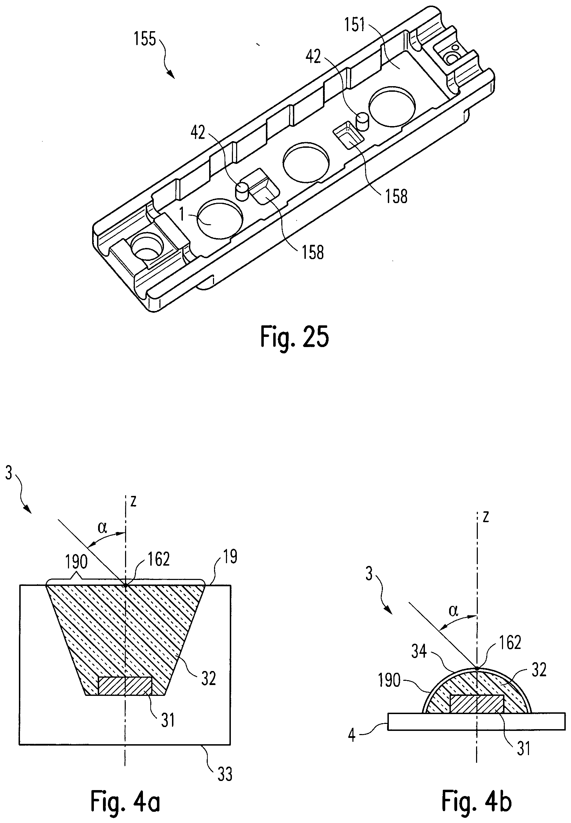

Fig. 4a zeigt eine beispielhafte Ausführungsform eines LED-Packages 3. Das LED-Package 3 ist als Quaderform ausgebildet und umfasst die zuvor genannte Oberseite 19 und eine gegenüberliegende Unterseite 33 zum Anbringen auf den Träger 4. Das LED-Package 3 umfasst eine LED die bzw. einen LED-Chip 31 sowie eine Vergussmasse 32. Die LED 31 strahlt mit Bezug auf die Darstellung nach oben in Richtung der Oberseite 19. Die Oberseite 19 umfasst dabei einen Teilbereich 190, aus dem das von einem LED-Chip 31 emittierte Licht ausgesendet wird. Mehrere LEDs 31 können in einem LED-Package angeordnet werden. Das Zentrum der lichtemittierenden Fläche 162 des LED-Bauteils 3 hängt von dem Position und Anzahl der eingebauten LEDs ab. Auf die elektrischen Komponenten, die zur Aktivierung der LED notwendig sind, wird im vorliegenden Rahmen nicht eingegangen, da sie für die Erfindung ohne unmittelbare Relevanz sind. Hierzu wird auf den Stand der Technik verwiesen.

Die LED 31 kann eine monochromatische LED sein. Beispielsweise kann die LED 31 rotes, grünes oder blaues Licht aussenden. Vorzugsweise kann die Vergussmasse 32 Farbkonversionsmaterial wie z.B. einen Leuchtstoff in Form von fluoreszierenden Teilchen umfassen. Das Farbkonversionsmaterial wird z.B. in Kombination mit einer blauen LED verwendet, so dass das Farbkonversionsmaterial das von der LED ausgesendete blaue Licht teilweise absorbiert und gelbes Licht aussendet. Mit anderen Worten wird teilweise blaues Licht in gelbes oder gelbliches Licht umwandelt. Alternativ oder zusätzlich dazu kann auch ein Farbkonversionsmaterial benutzt werden, dass das blaue Licht teilweise in grünes bzw. grünliches oder rotes bzw. rötliches Licht umwandelt. Durch Mischung des erzeugten blauen und gelben Lichts entsteht ein mehr oder weniger ausgeprägtes weißes Licht.

Das blaue Licht, das direkt von der LED 31 ohne Wellenlängenumwandlung an dem Leuchtstoff nach außen tritt, wird dabei bevorzugt in einen bestimmten Raumwinkel, und zwar in einem Bereich um die Flächennormale der Oberseite 19 bzw. der LED 31 herum, abgestrahlt.

Hingegen wird das farbkonvertierte Licht, das von den Leuchtstoffteilchen ausgesendet wird, nach allen Richtungen abgestrahlt. Dies führt also dazu, dass das LED-Package im höheren Wellenlängenbereich, z.B. im gelben Wellenlängenbereich, wie ein diffuser Strahler strahlt. Einerseits kann jedes einzelne Leuchtstoffteilchen unabhängig von der Abstrahlrichtung senden, so dass das Abstrahlen gleichermaßen nach allen Richtungen erfolgen kann. Andererseits können diese Leuchtstoffteilchen aber auch eine Richtungsabhängigkeit im Abstrahlverhalten zeigen.

Fig. 4b zeigt eine beispielhafte Ausführungsform eines LED-Bauteils 3. Die LED 31 ist auf dem Träger 4 montiert und mit einer kuppelartigen Vergussmasse 32 beispielsweise einem sogenannten Globe-Top 34 abgedeckt. In diesem Fall ist die lichtemittierende Fläche 190 gleich der äußeren Oberfläche der Vergussmasse 32 oder dem Globe Top 34.

Fig. 2 zeigt eine schematische Schnittansicht von repräsentativen Strahlengängen in drei unterscheidbaren Bereichen der Linse. Eine LED-Lichtstrahlung, die von einer sich auf der optischen Achse z der Linse 1 befindlichen Punktlichtquelle ausgeht, trifft mit einem Einfallwinkel We - bezüglich der optischen Achse z - auf die Lichteinfallseite und tritt mit einem Ausfallwinkel Wa aus der Lichtausfallseite 6 wieder aus. Die Punktlichtquelle entspricht vorzugsweise dem Punkt P als Schnittpunkt der optischen Achse z mit der Oberseite 19 des LED-Packages 3. Die optische Achse der Linse 1 kann vorzugsweise der Flächennormale der Oberseite 19 bzw. der LED 31 entsprechen.

Die Linse 1 ist nunmehr derart ausgestaltet, dass mit zunehmendem Einfallwinkel We der Ausfallwinkel Wa zunächst ansteigt. Dies erfolgt z.B. in einem ersten Einfallwinkel-Bereich von 0° bis z.B. 40°, 50° oder 60°. Stellvertretend für diesen ersten Bereich sind die in Fig. 2 gezeigten Strahlengänge S1, S2.

Steigt der Einfallwinkel über diesen Wert von z.B. 40°, 50° oder 60°, dann nimmt der Ausfallwinkel Wa wieder ab. Stellvertretend für diesen zweiten Bereich der Linse ist der Strahlengang S3.

Für höhere Werte des Einfallwinkels We ab z.B. 70° oder 80° steigt dann der Ausfallwinkel Wa wieder an. Stellvertretend für diesen dritten Bereich der Linse ist der Strahlengang S4.

Die Strahlengänge S1, S2 befinden sich im ersten Bereich der Linse. Diese Strahlungen treten aus der LED bzw. aus dem LED-Package 3 in einem Raumwinkel in der Nähe der optischen Achse z. Bei einer farbkonvertierten blauen LED haben diese Strahlung, wie bereits erläutert, hauptsächlich eine bläuliche Farbe im Vergleich z.B. zu den Strahlungen die in der Nähe von Θ=90° aus der LED bzw. aus dem LED-Package austreten. Da in diesem Bereich ein sehr großer Anteil des Gesamtlichtes der LED abgestrahlt wird, werden diese Strahlung stark abgelenkt, was insbesondere durch den steilen Mittenbereich 11 der Lichteinfallseite 5 erfolgt. Um eine gewünschte gleichmäßige Lichtverteilung erreichen zu können, werden die Strahlungen zwei Mal gebrochen.

Die Strahlung gemäß dem Strahlengang S3 muss nicht unbedingt abgelenkt werden. Gemäß einer gewünschten Abstrahlcharakteristik ist es gewünscht, in diesem zweiten Bereich der Linse z.B. zwischen Θ=60° und Θ=70° das meiste Licht zu erzeugen. Die Lichtstrahlung in diesem zweiten Bereich ist schon leicht gelblich, wird aber mit blauer Strahlung aus dem ersten Bereich, s. z.B. Strahlengang S2, derart gemischt, dass die gelbliche Farbe nicht sichtbar wird. Im ersten Bereich und im zweiten Bereich der Linse wird also ein homogenes weißes Licht erzeugt.

Der Strahlengang S4 im dritten Bereich ist dagegen schon stark gelblich, hat aber nur geringere Intensität. Es muss vorzugsweise vermieden werden, dass diese Strahlung durch eventuelle interne Reflexionen nach vorne abgestrahlt wird. Um das sicherstellen zu können, wird diese Strahlung beim Eintreten in die Linse durch den konvexen Zwischenbereich 13 leicht nach oben gerichtet, und beim Austreten wird sie nach unten abgelenkt, insbesondere durch den konvexen Außenbereich 9. Somit kann es vermieden werden, dass gelbliches Licht sichtbar wird.

Figs. 5-9 zeigen die von einem Detektor (nicht gezeigt) erfasste Beleuchtungsstärke. Die x-Achse entspricht jeweils die Position auf dem Detektor, die y-Achse gibt die erfasste Beleuchtungsstärke wieder. Der Detektor ist 5 cm oberhalb vom Träger bzw. von der Leiterplatte 4 positioniert und ist 20 cm ^{∗} 20 cm groß. Für die Messung der Beleuchtungsstärke gelten folgende Parameter. Die LED erzeugt eine Farbtemperatur von 6500 K. Das LED-Package misst 3 mm ^{∗} 2 mm ^{∗} 0,52 mm in der Höhe. Der Träger hat eine Fläche von 48 mm ^{∗} 9 mm und eine Höhe von 1,5 mm.

Fig. 5 zeigt die Beleuchtungsstärke des LED-Packages ohne Linse.

Fig. 6 zeigt eine deutlich homogenere Beleuchtungsstärke unter Verwendung einer erfindungsgemäßen Linse aufweisend einen Durchmesser von 8,4 mm und eine Höhe von 5,2 mm. Der Differenzwert zwischen der maximalen Beleuchtungsstärke und der minimalen Beleuchtungsstärke beträgt 80 lx.

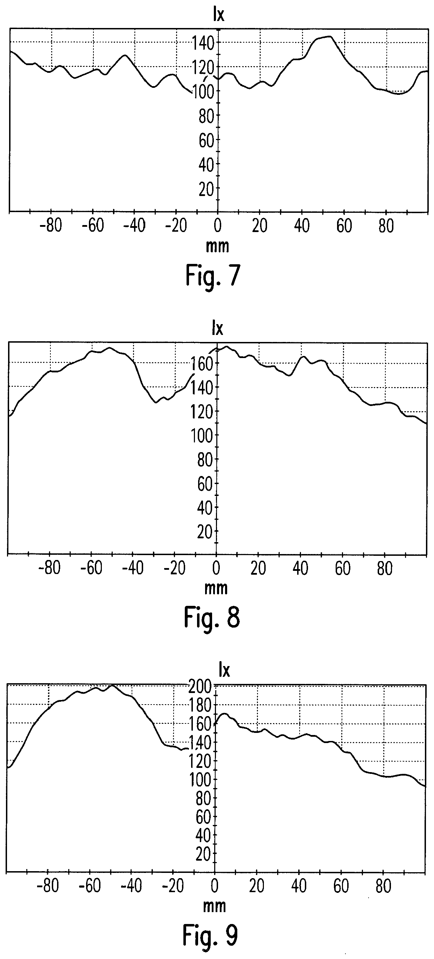

In der LED-Einheit 160 gemäß dem Diagramm von Fig. 7 wurde die Größe der Linse mit Faktor 1,4 aufskaliert, was zu einer Reduzierung des Differenzwerts auf 40 lx führt.

Fig. 8 bezieht sich auf die LED-Einheit 160 gemäß Fig. 6, wobei die Außenseite bzw. die Lichtausfallseite 6 der Linse 1 eine Erodierstruktur aufweist. Der Differenzwert fällt dabei auf ungefähr 60 lx. Durch die Veränderung der Oberfläche ist die Gleichmäßigkeit der Abstrahlung beeinflussbar.

In den vorigen Beispielen entspricht die Flächennormale des LED-Chips der optischen Achse der Linse 1. Fig. 9 bezieht sich nunmehr auf eine LED-Einheit 160 mit versetzter Linse, d.h. die optische Achse der Linse ist gegenüber der Flächennormale des LED-Chips versetzt. Ein Versatz von 100 µm zeigt in Fig. 9 bereits eine Erhöhung des Differenzwerts zwischen der maximalen Beleuchtungsstärke und der minimalen Beleuchtungsstärke. Die LED-Einheit 160 zeigt insgesamt sich als robust bei versetzter Linse.

Fig. 10 zeigt den in der Linse 1 aufgenommenen Chip 31 auf einem Träger 4 und Lichtstrahle. In diesem Ausführungsbeispiel ist ersichtlich, dass zwar der LED-Chip 31 selbst zentral in der optischen Achse der Linse 1 sitzt, sodass das optische Zentrum der lichtemittierende Fläche der LED-Package 162 auf der optischen Achse z der Linse 1 liegt, indessen das LED-Package 3 nicht mittig, also geometrisch asymmetrisch sitzt. Dadurch wird verdeutlicht, dass die Optik der Linse robust dahingehend ausgelegt ist, dass unterschiedliche LED-Packages aufgenommen werden können, wobei indessen das optische Zentrum der lichtemittierenden Oberfläche des LED-Bauteils bzw. des LED-Packages 3 auf der optischen Achse z der Linse 1 liegt. Falls eine LED 31 in dem LED-Package 3 eingebaut ist, stimmt das optische Zentrum der lichtemittierende Fläche des LED-Bauteils 3 mit dem optischen Zentrum der LED 31 überein. Vorzugsweise ist die Linse aus einem transparenten Material.

Vorzugsweise ist die Außenseite der Linse wenigstens teilweise mechanisch bearbeitet, dahingehend, dass sie beispielsweise aufgeraut ist zur weiteren Homogenisierung der Lichtausstrahlcharakteristik. Zur Homogenisierung des ausgestrahlten Lichtes kann die Linse eine Schicht von streuenden Partikeln (z.B. TiO₂, SiO₂, Ba₂TiO₄) auf ihrer Innen- und/oder Außenseite beinhalten. Indessen kann in dem Linsenkörper Streupartikel aufgenommen sein. Vorzugsweise enthält die Linse kein Phosphormaterial.

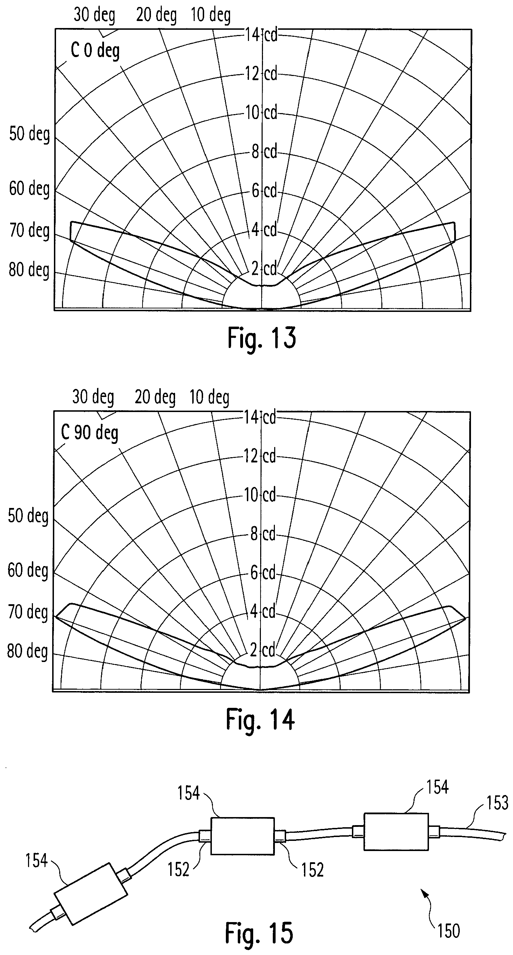

In Fig. 11 ist eine Draufsicht eines Oberteils 154 einer LED-Einheit 160 mit drei erfindungsgemäßen Linsen 1 für jeweils drei LED-Packages 3 dargestellt. Das entsprechende Beleuchtungsstärke-Diagramm ist in Fig. 12 gezeigt, wobei die Parameter der Fig. 5 auch hier gelten. Die Figuren 13-14 zeigen die Abstrahlcharakteristik dieser LED-Einheit 160 gemäß Fig. 11 jeweils über die y-Achse, d.h. über die Querrichtung der LED- Einheit 160, und über die x-Achse, d.h. über die Längsrichtung der LED-Einheit 160. Es ist deutlich dargestellt, daß das optische Zentrum der lichtemittierenden Fläche des LED-Bauteils 162 auf der optischen Achse z der Linse 1 liegt.

Fig. 15 zeigt eine Draufsicht einer erfindungsgemäßen Kettenanordnung 150. Zur Ausleuchtung von Symbolen, Lightboxes oder Schriften, wie z.B. Leuchtbuchstaben können vorteilhafterweise mehrere erfindungsgemäße LED-Einheiten 160 in einer Kettenanordnung 150 aneinander gereiht werden. Jede LED-Einheit 160 der Anordnung kann dann auf einer oder beiden seiner Längsseiten einen Vorsprung 152 aufweisen zum Befestigen einer Stromleitung 153 in das Innere der LED-Leuchteinheit 160. Die Stromleitung 153 versorgt die LEDs in den LED-Leuchteinheiten 160 mit Spannung bzw. Strom. An den Vorsprüngen 152 können die Stromleitung 153 befestigt werden, damit sie bei Zug nicht von den Anschlüssen im Inneren der LED-Einheit 160 abreißen. So können z. B. mit zwei durchgängigen Stromleitungen 153, wie in Fig. 15 dargestellt, mehrere LED-Einheiten 160 zu einer Kettenanordnung 150 aneinandergereiht werden.

Wird die Stromleitung 153 als herkömmliches, flexibles Kabel realisiert so sind die LED-Einheiten 160 gegeneinander beweglich und können leicht zum Beispiel für die Ausleuchtung verschiedener Leuchtbuchstaben verändert werden. Alternativ können die Stromleitungen 153 zwischen den LED-Einheiten 160 auch starr gefertigt werden, so dass eine festgelegte Form ausgeleuchtet wird. Der Vorteil ist dabei die erhöhte Stabilität der Kettenanordnung.

Die Erfindung kann auch für die Ausleuchtung eines Lichtkastens verwendet werden. Ein Lichtkasten, vorzugsweise zur Werbebeleuchtung, aufweisend zumindest eine transparente Frontseite wird durch wenigstens eine erfindungsgemäße LED-Einheiten 160 ausgeleuchtet.

Ein Lichtkasten (nicht gezeigt) kann eine transparente oder teiltransparente Frontseite aufweisen. Der Lichtkasten weist vorzugsweise eine reflektierende Rückseite oder alternativ eine transparente oder teiltransparente Rückseite auf. Der Lichtkasten kann weiterhin reflektierende Seitenwände oder transparente Seitenwände aufweisen. Auch die Seitenwände können auch als teiltransparente Seitenwände ausgebildet sein. Somit ergeben sich bei Anwendung von reflektierenden Seitenteilen Reflektormittel für den Lichtkasten.

Wie bereits erläutert weist der Lichtkasten zumindest eine erfindungsgemäße LED-Einheit 160 auf. Vorzugsweise ist das mindestens eine LED- Einheit 160 so ausgerichtet, dass die emittierten und von den Reflektormitteln umgelenkten Lichtstrahlen zwischen der Rückseite und der Frontseite des Lichtkastens oder auf eine dieser beiden Seiten eingestrahlt werden. Die Frontseite kann durch eine Diffusorscheibe gebildet werden.

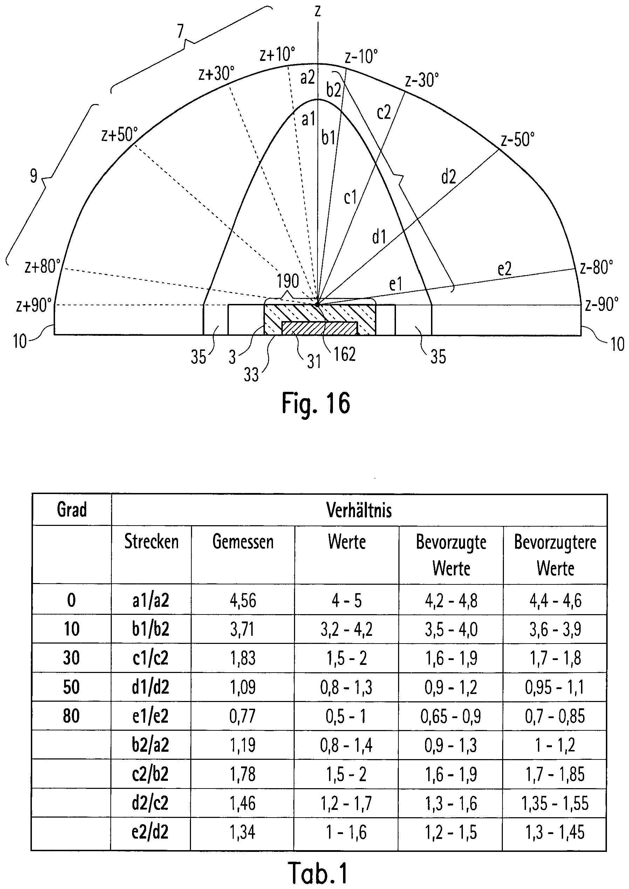

Fig. 16 zeigt eine zum Ausführungsbeispiel der Fig. 1 alternative nicht erfindungsgemäße Linse 1. Im Folgenden wird lediglich auf die Unterschiede zwischen den Ausführungsbeispielen der Fig. 1 und der Fig. 16 eingegangen. Im Unterschied zur Fig. 1 weist die Lichtausfallseite 6 der Linse gemäß Fig. 16 lediglich zwei Bereiche auf, die z.B. durch ihre Wölbung und ihren Krümmungsradius gekennzeichnet werden können. Ein Mittenbereich bzw. Mittelbereich 7 der Lichtausfallseite 6 erstreckt sich kreisförmig ausgehend von der optischen Achse z. Der Mittenbereich 7 ist konvex und definiert so einen nach außen gewölbten Bereich der Lichtausfallseite 6. Der Mittenbereich 7 weist vorzugsweise eine gleichmäßige Krümmung, d.h. einen konstanten Krümmungsradius R7, auf.

An den Mittenbereich 7 angrenzend weist die Lichtausfallseite 6 einen ebenfalls konvex ausgeformten Außenbereich 9 mit einem im Wesentlichen konstanten Krümmungsradius R9 auf. Der Außenbereich 9 erstreckt sich nach außen hin, d.h. weg von der optischen Achse z. Der Krümmungsradius R9 des Außenbereichs 9 ist vorzugsweise kleiner als der Krümmungsradius R7. In einem Ausführungsbeispiel gemäß Fig. 16 kann z.B. gelten R9 < 1/2 ^{∗} R7, vorzugsweise R9 < 1/3 ^{∗} R7 oder R9 < 1/4 ^{∗} R7. Andererseits ist der Wert R9 vorzugsweise größer als ein Zehntel des Krümmungsradius R7. Alternativ kann der Wert R9 vorzugsweise ein Zehntel bzw. ungefähr ein Zehntel des Krümmungsradius R7 betragen, oder R9 kann kleiner sein als ein Zehntel des Krümmungsradius R7.

Erfindungsgemäß ist vorgesehen, dass der Abstand a2 zwischen der Lichteinfallseite 5 und der Lichtausfallseite 6 im Bereich der optischen Achse z der Linse 1 am Geringsten ist. Überdies ist vorgesehen, dass der Abstand zwischen der Lichteinfallseite 5 und der Lichtausfallseite 6 im Bereich der, zur optischen Achse z orthogonalen Achse z+90°, z-90° der Linse 1 am Größten ist. Überdies ist der Abstand zwischen der Lichteinfallseite 5 und der Lichtausfallseite 6 ausgehend vom Bereich der optischen Achse z der Linse 1 hin zur, der optischen Achse z orthogonalen optischen Achse z+90°, z-90° der Linse 1 sukzessiv vergrößert ist.

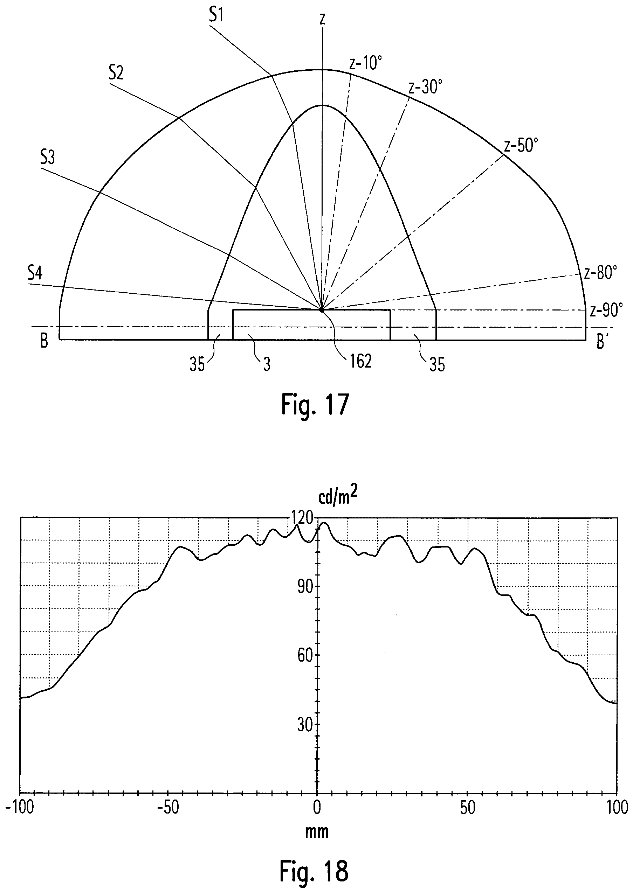

Durch die Ausformung der Linse 1 gemäß Fig. 16 werden die vom LED-Package 3 ausgestrahlten Lichtstrahlen derart abgelenkt, dass sowohl die Farbcharakteristik der LED sowie auch die Abstrahlcharakteristik hinsichtlich der Beleuchtungsstärke homogenisiert werden, was in den Ausführungen zu Fig. 17 näher erläutert wird.

In Fig. 16 wird ein LED-Package gemäß Fig. 4 eingesetzt, aufweisend eine LED-Package-Oberseite 19, welche eine Teiloberseite 190 umfasst, aus der das vom LED-Chip 31 emittierte Licht heraustritt.

Entscheidend für eine homogene Lichtverteilung ist die exakte Positionierung der Linse 1 oberhalb des LED-Packages 3. Insbesondere müssen die optische Achse z der Linse 1 und die optische Achse z' des LED-Packages 3 übereinander angeordnet sein und sollten insbesondere keinen Versatz (oder wenig Toleranz)in x- und y-Richtung aufweisen. Durch eine derartige Positionierung wird sichergestellt, dass die optischen Eigenschaften der Linse 1 optimal ausgenutzt werden und sowohl eine homogene Beleuchtungsstärke als auch eine homogene Farbcharakteristik erzielt wird.

In Tab.1 sind Abstandsverhältnisse angegeben, die zu einer homogenen Farbcharakteristik und einer homogenen Beleuchtungsstärkeverteilung führen.

Insbesondere sollte das Verhältnis aus dem Abstand a1 zwischen der Lichteinfallseite 5 und dem LED-Bauteil 3 sowie dem Abstand a2 zwischen Lichteinfallseite 5 und Lichtausfallseite 6 im Bereich der optischen Achse z der Linse 1 einem numerischen Wert zwischen 4 und 5, bevorzugt zwischen 4,2 und 4,8 entsprechen. Idealerweise beträgt das Verhältnis a2 zu a1 einem Wert zwischen 4,4 und 4,6. Im Ausführungsbeispiel gemäß Fig. 16 ist der Wert 4,56.

Insbesondere sollte das Verhältnis aus dem Abstand bl zwischen der Lichteinfallseite 5 und dem LED-Package 3 sowie dem Abstand b2 zwischen Lichteinfallseite 5 und Lichtausfallseite 6 im Bereich einer, zur optischen Achse z der Linse 1 im Winkel von 10° befindlichen optischen Achse z+10°, z-10° einem numerischen Wert zwischen 3,2 und 4,2, bevorzugt zwischen 3,5 und 4,0 entsprechen. Idealerweise beträgt das Verhältnis b2 zu b1 einem Wert zwischen 3,6 und 3,9. Im Ausführungsbeispiel gemäß Fig. 16 ist der Wert 3,71.

Insbesondere sollte das Verhältnis aus dem Abstand c1 zwischen der Lichteinfallseite 5 und einem LED-Package 3 sowie dem Abstand c2 zwischen Lichteinfallseite 5 und Lichtausfallseite 6 im Bereich einer, zur optischen Achse z der Linse 1 im Winkel von 30° befindlichen optischen Achse z+30°, z-30° einem numerischen Wert zwischen 1,5 und 2, bevorzugt zwischen 1,6 und 1,9 entsprechen. Idealerweise beträgt das Verhältnis c2 zu c1 einem Wert zwischen 1,7 und 1,8. Im Ausführungsbeispiel gemäß Fig. 16 ist der Wert 1,83.

Insbesondere sollte das Verhältnis aus dem Abstand d1 zwischen der Lichteinfallseite 5 und einem LED-Package 3 sowie dem Abstand d2 zwischen Lichteinfallseite 5 und Lichtausfallseite 6 im Bereich einer, zur optischen Achse z der Linse 1 im Winkel von 50° befindlichen optischen Achse z=+50°, z=-50° einem numerischen Wert zwischen 0,8 und 1,3, bevorzugt zwischen 0,9 und 1,2 entsprechen. Idealerweise beträgt das Verhältnis d2 zu d1 einem Wert zwischen 0,95 und 1,1. Im Ausführungsbeispiel gemäß Fig. 16 ist der Wert 1,09.

Insbesondere sollte das Verhältnis aus dem Abstand e1 zwischen der Lichteinfallseite 5 und einem LED-Package 3 sowie dem Abstand e2 zwischen Lichteinfallseite 5 und Lichtausfallseite 6 im Bereich einer, zur optischen Achse z der Linse 1 im Winkel von 80° befindlichen optischen Achse z=+80°, z=-80° einem numerischen Wert zwischen 0,5 und 1, bevorzugt zwischen 0,65 und 0,9 entsprechen. Idealerweise beträgt das Verhältnis e2 zu e1 einem Wert zwischen 0,7 und 0,85. Im Ausführungsbeispiel gemäß Fig. 16 ist der Wert 0,77.

Insbesondere sollte das Verhältnis aus dem Abstand b2 zwischen Lichteinfallseite 5 und einem LED-Package 3 im Bereich einer, zur optischen Achse z der Linse 1 im Winkel von 10° befindlichen optischen Achse z=+10°, z=-10° sowie dem Abstand a2 zwischen Lichteinfallseite 5 und dem LED-Package 3 im Bereich der optischen Achse z einem numerischen Wert zwischen 0,8 und 1,4, bevorzugt zwischen 0,9 und 1,3 entsprechen. Idealerweise beträgt das Verhältnis b2 zu a2 einem Wert zwischen 1 und 1,2. Im Ausführungsbeispiel gemäß Fig. 16 ist der Wert 1,19.

Insbesondere sollte das Verhältnis aus dem Abstand c2 zwischen Lichteinfallseite 5 und einem LED-Package 3 im Bereich einer, zur optischen Achse z der Linse 1 im Winkel von 30° befindlichen optischen Achse z=+30°, z=-30° sowie dem Abstand b2 zwischen Lichteinfallseite 5 und dem LED-Package 3 im Bereich einer, zur optischen Achse z der Linse 1 im Winkel von 10° befindlichen optischen Achse z=+10°, z=-10° einem numerischen Wert zwischen 1,5 und 2, bevorzugt zwischen 1,6 und 1,9 entspricht. Idealerweise beträgt das Verhältnis c2 zu b2 einem Wert zwischen 1,7 und 1,85. Im Ausführungsbeispiel gemäß Fig. 16 ist der Wert 1,78.

Insbesondere sollte das Verhältnis aus dem Abstand d2 zwischen Lichteinfallseite 5 und einem LED-Package 3 im Bereich einer, zur optischen Achse z der Linse 1 im Winkel von 50° befindlichen optischen Achse z=+50°, z=-50° sowie dem Abstand c2 zwischen Lichteinfallseite 5 und dem LED-Package 3 im Bereich einer, zur optischen Achse z der Linse 1 im Winkel von 30° befindlichen optischen Achse z=+30°, z=-30° einem numerischen Wert zwischen 1,2 und 1,7, bevorzugt zwischen 1,3 und 1,6 entspricht. Idealerweise beträgt das Verhältnis d2 zu c2 einem Wert zwischen 1,35 und 1,55. Im Ausführungsbeispiel gemäß Fig. 16 ist der Wert 1,46.

Insbesondere sollte das Verhältnis aus dem Abstand e2 zwischen Lichteinfallseite 5 und einem LED-Package 3 im Bereich einer, zur optischen Achse z der Linse 1 im Winkel von 80° befindlichen optischen Achse z=+80°, z=-80° sowie dem Abstand d2 zwischen Lichteinfallseite 5 und dem LED-Package 3 im Bereich einer, zur optischen Achse z der Linse 1 im Winkel von 50° befindlichen optischen Achse z=+50°, z=-50° einem numerischen Wert zwischen 1 und 1,6, bevorzugt zwischen 1,2 und 1,5 entspricht. Idealerweise beträgt das Verhältnis e2 zu d2 einem Wert zwischen 1,3 und 1,45. Im Ausführungsbeispiel gemäß Fig. 16 ist der Wert 1,34.

Diese numerischen Werte gemäß Tab.1 sind als beispielhafte Ausgestaltungen der Erfindung zu verstehen, sodass alternative numerische Werte der Abstände a1-e1 bzw. a2-e2 denkbar sind.

In Fig. 17 ist die Linse 1 gemäß Fig. 16 mit vier exemplarischen Strahlengängen S1 bis S4 dargestellt. Überdies ist eine zweite Schnittline B-B gezeigt, die in nachfolgenden Figuren verwendet wird.

Die Strahlengänge S1 und S2 weisen eine bläuliche Farbe im Vergleich zu den Strahlengängen S3 und S4 auf die in der Nähe der zur optischen Achse orthogonalen Achse z=+90°, z=-90° aus der LED 3 austreten. Da im Bereich der Strahlengänge S1 und S2 ein großer Anteil des Gesamtlichtes der LED 3 abgestrahlt wird, müssen diese Strahlengänge S1 und S2 stark abgelenkt werden. Um die gewünschte Lichtverteilung erreichen zu können, werden die Strahlengänge zweimal gebrochen. Die Strahlengänge S1 und S2 treffen dabei in der Nähe der optischen Achse bei z=+10° und Z=+30° auf die Lichteinfallseite 5 der Linse 1, wo die Lichtstrahlen S1, S2 von der optischen Achse z weg gebrochen werden. An der Lichtausfallseite 6 der Linse 1 werden die Lichtstrahlen S1, S2 erneut von der optischen Achse z weg gebrochen. Aufgrund der Ausformung der Linse 1 und entsprechender Ausgestaltung der Abständen a1, a2, b1 und b2 wird somit eine homogene Lichtverteilung erreicht, wie in Fig. 18 gemäß Beleuchtungsdiagramm gezeigt wird.

Der Strahlengang S3, der entlang einer im Winkel von 50° zur optischen Achse z ausgestrahlt wird, erfährt lediglich eine geringe Ablenkung durch die Linse 1, da durch die Ausformung der Linse 1 entsprechend geringe Eintritts- und Austrittswinkel aufweist. Um eine homogene Abstrahlcharakteristik und eine homogene Beleuchtungsstärkeverteilung zu erhalten ist speziell Licht in diese Richtung z=50°, z=-50° abzulenken. Dies wird beispielsweise durch die Ablenkung des Strahlengangs S2 erreicht, der nach dem Austritt aus der Linse 1 quasiparallel zum Strahlengang S3 verläuft. Die Wellenlänge des Strahlengangs S3 befindet sich im gelblichen sichtbaren Bereich, wird aber aufgrund der Überlagerung mit dem Licht des Strahlengangs S2 sehr vermischt, wodurch eine homogene Farbcharakteristik erreicht wird.

Der Strahlengang S4, der entlang einer im Winkel von 80° zur optischen Achse z ausgestrahlt wird, weist eine starkgelbliche Wellenlänge auf. Der Strahlengang S4 hat allerdings nur geringere Intensität. Es ist Aufgabe der Linse 1, zu vermeiden, dass diese Strahlung durch eventuelle interne Reflexionen zur optischen Achse z hin gebrochen wird und somit die Farbcharakteristik der LED 3 stark verfälscht wird. Um das sicherstellen zu können, wird der Strahlengang S4 in Richtung der optischen Achse z=+90° abgelenkt, damit die Lichtstärke des ausgestrahlten Lichts über einen längeren Lichtweg weiter geschwächt wird und nicht abgebildet wird.

In Fig.18 ist ein Beleuchtungsstärke-Diagramm entsprechend der Fig.5 bis Fig.9 für eine Linse gemäß Fig. 16 dargestellt. Das Diagramm gemäß Fig.18 zeigt eine deutlich homogenere Beleuchtungsstärke unter Verwendung einer Linse gemäß Fig.16 als ohne Linse, siehe beispielsweise Fig. 5. Der Differenzwert zwischen der maximalen Beleuchtungsstärke und der minimalen Beleuchtungsstärke beträgt gemäß Fig. 18 lediglich 75 Lux. Eine gleichmäßige Ausleuchtung ist somit erfindungsgemäß erzielt.

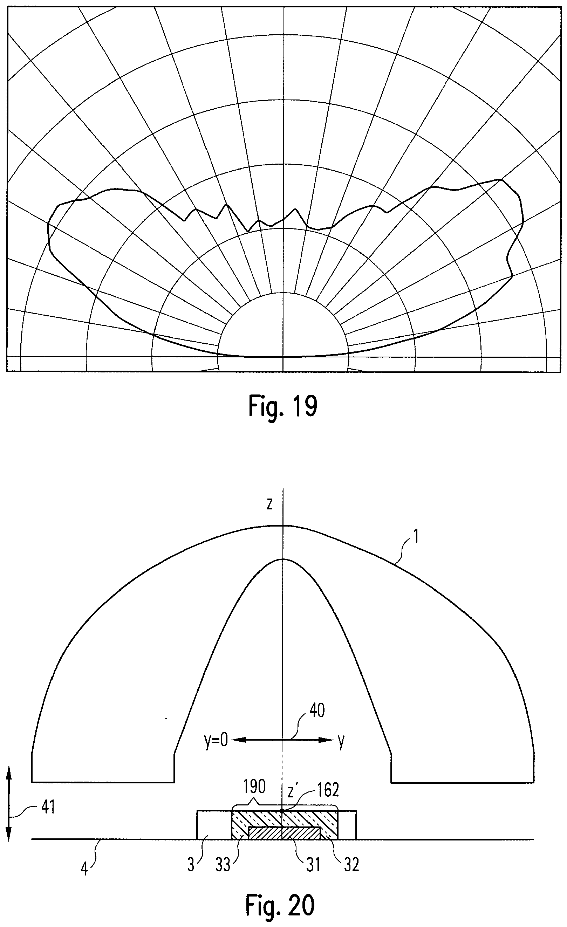

In Fig. 19 ist ein Abstrahl-Diagramm der erfindungsgemäßen Linse gemäß Fig. 16 dargestellt. Fig. 18 zeigt dabei die Abstrahlcharakteristik der LED 3 jeweils über die y-Achse, d.h. über die Querrichtung der LED 3, und über die x-Achse, d.h. über die Längsrichtung der LED 3. Zu erkennen ist, dass aufgrund der Linse 1 eine verbesserte Ausleuchtung erfolgt.

Fig. 20 zeigt das Ausrichten und Positionieren der Linse 1 auf dem LED-Modul 2/ Träger 4 oberhalb des LED-Packages 3. Dabei ist darauf zu achten, dass die optische Achse z der Linse 1 deckungsgleich mit der optischen Achse z' des LED-Packages 3 ist. Um dies zu erreichen wird in einem Herstellungsschritt die Linse 1 in x- und/oder y-Richtung, also einer Ebene parallel zum Träger 4, solange verschoben, bis beide optischen Achsen z, z' übereinander liegen. Dies ist mit dem Ausrichtepfeil 40 dargestellt. Das optische Zentrum 162 der lichtemittierenden Fläche des LED-Packages ist im Idealfall von dem LED-Package Hersteller gemessen und ist auf dem Datenblatt angegeben. Basierend auf dieser Information kann der erwähnte Herstellungsprozess-Schritt optimiert werden. Die Ausrichtung wird technisch mittels zumindest eines Positionierungselements 42 ermöglicht, wie insbesondere der Fig.25 zu entnehmen ist. Anschließend erfolgt eine Positionierung 41 der Linse 1 auf dem LED-Modul 2.

In Fig. 21 ist ein alternatives Ausführungsbeispiel der erfindungsgemäßen LED-Einheit 160 gemäß Fig. 1 in 3D-Ansicht gezeigt. Die LED-Einheit 160 weist ein Oberteil 154 auf. Das Oberteil 154 umfasst gemäß Fig. 21 drei erfindungsgemäße Linsen 1, beispielsweise also gemäß Fig. 16 ausgestaltet sind. Die Linsen 1 sind in Reihe nebeneinander angeordnet. Zwischen den Linsen 1 sind Linsenbrücken 157 vorgesehen, durch die die Linsen 1 optisch gekoppelt sind, um die Ausstrahlungscharakteristik hinsichtlich der Lichtverteilung und der Farbcharakteristik zu verbessern. Der Oberteil 154 weist Vorsprünge 152 mit Kanälen 159 auf, um die Stromleitungen 153 zu befestigen, ferner ein mechanisches Positionierungs- bzw. Befestigungselement wie beispielsweise die Ausnehmung 161 können in den Vorsprüngen 152 oder zumindest in einem der Vorsprünge 152 untergebracht werden.

Die LED-Einheit 160 weist ein LED-Modul 2 auf. Auf dem Träger 4 des LED-Moduls 2 sind entsprechend der Anzahl an Linsen 1 eine Anzahl LED-Packages/LED-Bauteile 3 platziert. Die Linsen 1 werden oberhalb des Trägers 4 angeordnet, um eine LED-Einheit 160 der vorangegangen beschriebenen Art zu erhalten. Um eine homogene Lichtverteilung zu erwirken, sind Linsen 1 und LED-Packages 3 anhand ihrer optischen Achsen z auszurichten. Zu diesem Zweck weist der Träger 4 zwei Positionselemente 42 auf. Die Positionselemente 42 sind dabei als Löcher ausgebildet, in die Positionsstifte 42 des Oberteils 154 eingebracht werden. Damit wird eine Übereinstimmung der optischen Achsen z, z' erwirkt, wodurch eine Ausrichtung vereinfacht und optimiert ermöglicht ist.

Die LED-Einheit 160 umfasst weiterhin ein Unterteil 155. Im Unterteil 155 verlaufen Stromleitungen 153, um die LED-Packages 3 mit Strom bzw. Spannung zu versorgen. Das Unterteil 155 führt die Stromleitungen 153 in Stromleitungskanälen. Unterhalb des Unterteils 155 ist optional ein Befestigungselement 156 vorgesehen, insbesondere eine mit Klebemitteln versehene Schicht, wodurch die LED- Einheit 160 an ein Objekt angehaftet werden kann. Überdies sind im Oberteil 154 der LED-Einheit 160 zwei Vorsprünge 152 an den Enden vorgesehen. Mittels einer Ausnehmung 161 in einem der Vorsprünge 152 kann die LED- Einheit 160 an einem Gegenstand oder einer Wand montiert werden.

Alternativ und hier nicht dargestellt können die Linsen 1 auch in einem Dreieck angeordnet sein, um eine alternative Abstrahlcharakteristik zu ermöglichen und die Signages/Light-boxes mit unterschiedlichsten Maßen und/oder Formen homogen zu beleuchten.

In Fig. 22 ist das LED-Einheit 160 gemäß Fig. 21 entlang einer ersten Schnittlinie A-A gezeigt (Seitenansicht). Diese Darstellung zeigt einerseits die Übereinstimmung der optischen Achse z des LED-Packages 3 mit der jeweiligen optischen Achse z der zugehörigen Linse 1. Überdies sind Kavitäten 158 für elektrische Bauelemente gezeigt. Die Positionierungselemente 42, die die Ausrichtung von LED-Package 3 und Linse 1 sicherstellen, sind in dieser Ansicht nicht sichtbar, weil sie in das Unterteil 155 hineinragen. Das Unterteil 155 kann durch ein sogenanntes Vergussverfahren, auch Potting genannt, gefertigt werden.

Weitere ähnliche bekannte Methoden, insbesondere das Overmoulding, können zur Fertigung auch eingesetzt werden.

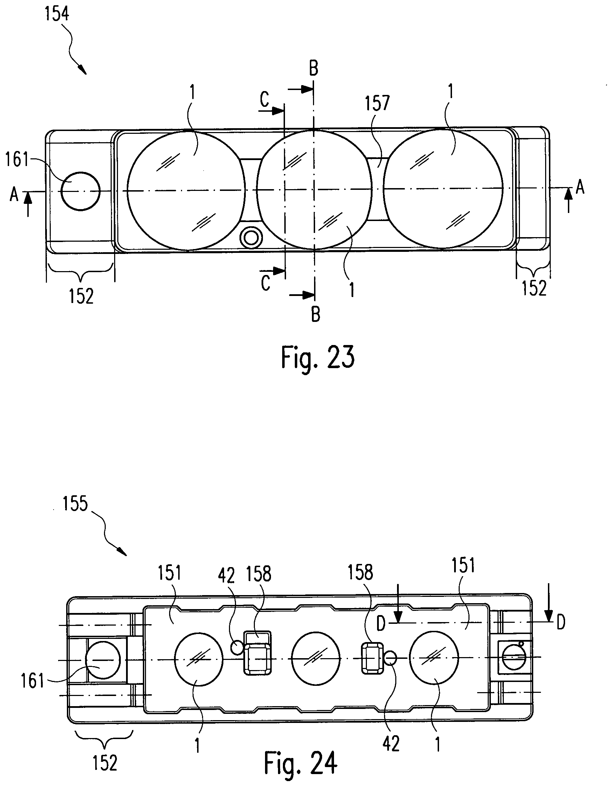

In Fig. 23 ist ein erfindungsgemäßes Oberteil 154 der LED-Einheit 160 gemäß Fig. 21 in Draufsicht gezeigt. Gut zu erkennen sind die Linsenbrücken 157, die einerseits eine optische Kopplung der einzelnen Linsen 1 ermöglichen und andererseits die exakte Positionierung der Linsen 1 oberhalb des dazugehörigen LED-Packages 3 erwirkt. Mechanisches Positionierungselement 161 ist beispielsweise in einem der Vorsprüngen 152 untergebracht.

In Fig. 24 ist ein erfindungsgemäßes Oberteil 154 der LED-Einheit 160 gemäß Fig. 21 in Untersicht gezeigt. Dabei weist das Oberteil 154 eine Oberteil-Kavität 151 auf. In diese Oberteil-Kavität 151 wird das LED-Modul 2 eingebracht und mittels Positionierungselementen 42 ausgerichtet. Überdies sind im Oberteil 154 zusätzlich Kavitäten für die elektrische Bauelemente 158 (z.B. Widerstand, Kondensator, BCR usw.) eingebracht.

In Fig. 25 ist das Oberteil 154 gemäß Fig. 24 in Innenansicht gezeigt. Wenn die Stromleitungen 153 und das LED-Modul 2 im Oberteil 154 platziert sind, wird eine Vergussmasse in die Oberteil-Kavität 151 eingebracht, durch die das Unterteil 155 geformt wird. Sodann sind Stromleitungen 153 und LED-Modul 2 sowie die LED-Einheit 160 gegen äußere Umwelteinflüsse, wie Feuchtigkeit, Schmutz etc. geschützt.

Anstelle eines LED-Packages 3 kann auch ein mittels Globe-Top vergossenener LED-Chip/LED die 31 auf dem Träger 4 platziert sein. Die Ausrichtungs- und Positionierungsschritte zwischen dem LED-Chip 31 und der Linse 1 ändern sich bezüglich dieser Ausführungsvariante nicht.

### Bezugszeichenliste

- 1: Linse
- 2: LED-Modul
- 3: LED-Bauteil, LED-Package/ LED die mit Globe-Top
- 4: Träger bzw. Leiterplatte
- 5: Lichteinfallseite
- 6: Lichtausfallseite
- 7: Konvexer Mittenbereich der Lichtausfallseite 6
- 8: Konkaver Zwischenbereich der Lichtausfallseite 6
- 9: Konvexer Außenbereich der Lichtausfallseite 6
- 10: Seitenbereich der Lichtausfallseite 6
- 11: Konkaver Mittenbereich der Lichteinfallseite 5
- 12: Teilabschnitt des konkaven Mittenbereichs 11
- 13: Konvexer Zwischenbereich der Lichteinfallseite 5
- 14: Aussparung oder Vertiefung der Linse
- 15: Innenraum zwischen LED und Linse
- 16: Konkaver, erster Außenbereich der Lichteinfallseite 5
- 17: Konvexer, zweiter Außenbereich der Lichteinfallseite
- 18: Unterbereich der Linse
- 19: Oberseite des LED-Packages
- 20: Kalotte des konkaven Mittenbereichs 11
- 31: LED bzw. LED-Chip
- 32: Vergussmasse
- 33: Unterseite des LED-Packages
- 34: Globe-Top
- 35: Freiraum
- 40: Ausrichtung zwischen LED-Package und Linse
- 41: Positionierung der Linse auf dem Träger
- 42: Positionierungselemente
- 150: Kettenanordnung
- 151: Oberteil-Kavität
- 152: Vorsprung
- 153: Stromleitung
- 154: Oberteil des LED-Moduls
- 155: Unterteil des LED-Moduls
- 156: Befestigungselement
- 157: Linsenbrücke
- 158: Kavität für elektrische Bauelemente
- 159: Kanal für die Stromleitung
- 160: LED-Leuchteinheit
- 161: Ausnehmung für mechanische Montierung
- 162: Optisches Zentrum der lichtemittierenden Fläche des LED-Bauteiles
- 163: Elektrisches Bauteil
- 190: Lichtaustrittsoberfläche des LED-Packages
- A-A: Erste Schnittlinie durch LED-Kettenoberteil
- B-B: Zweite Schnittlinie durch LED-Kettenoberteil
- S1-S4: Strahlengänge
- a-d: Optische Achsen an definierten Winkeln
- a1,b1,c1,d1,e1: Abstände zwischen LED-Package und Lichteinfallseite
- a2,b2,c2,d2,e2: Abstände zwischen Lichtein- und - Ausfallseite

## Patentansprüche

1. Linse (1) für eine LED-Einheit (160) mit einer oder mehreren LEDs, zur Verteilung des von der LED erzeugten Lichts,
aufweisend eine Lichteinfallseite (5) und eine Lichtausfallseite (6) bezüglich der LED, **dadurch gekennzeichnet, dass** die Lichtausfallseite (6) ausgehend von der optischen Achse (z) der Linse (1) sukzessiv einen konvexen Mittenbereich (7), einen konkaven Zwischenbereich (8) sowie einen konvexen Außenbereich (9) aufweist.

2. Linse gemäß Anspruch 1,
wobei die Linse aus einem transparenten Material besteht.

3. Linse gemäß einem der vorigen Ansprüche,
wobei die Linse Streupartikel enthält und/oder kein Farbkonversionsmaterial bzw. kein Phosphormaterial enthält.

4. Linse gemäß einem der vorigen Ansprüche,
wobei die Lichtausfallseite (6) der Linse wenigstens teilweise mechanisch bearbeitet ist, beispielsweise aufgeraut.

5. Linse gemäß einem der vorigen Ansprüche,
wobei die Lichteinfallseite (5) der Linse glatt oder mechanisch bearbeitet, beispielsweise aufgeraut, ist.

6. LED-Einheit (160) aufweisend ein LED-Modul (2) mit wenigstens einem darauf angeordneten LED-Bauteil (3) aufweisend mindestens eine LED,
wobei pro LED-Bauteil (3) jeweils eine Linse (1) gemäß einem der vorigen Ansprüche auf dem LED-Modul (2) derart angeordnet ist, dass zwischen dem LED-Bauteil (3) und der jeweiligen Linse (1) ein Innenraum (15) gebildet ist.

7. LED-Einheit (160) nach Anspruch 6,
wobei das LED-Bauteil (3) ein LED-Package oder eine LED mit einer Globe-Top ist.

8. LED-Einheit (160) nach Anspruch 6 oder 7,
wobei mindestens ein LED-Bauteil (3) eine blaue LED und Farbkonversionsmaterial aufweist, so dass blaues und farbkonvertiertes Licht einer längere Wellenlänge, beispielsweise gelbes Licht, auf die Lichteinfallseite (5) der entsprechenden Linse (1) trifft.

9. LED-Einheit (160) nach einem der Ansprüche 6 bis 8,
wobei die LED-Einheit (160) ein Oberteil (154) und ein Unterteil (155) aufweist, wobei zwischen Oberteil (154) und Unterteil (155) ein LED-Modul (2) angeordnet ist.

10. LED-Einheit (160) nach einem der Ansprüche 6 bis 9,
wobei zumindest ein Positionierungselement (42) vorgesehen ist, das einen Träger (4) oder das LED-Modul derart positioniert, dass die optische Achse (z) der zumindest einen Linse (1) mit der optischen Achse (z') des zumindest einen LED-Bauteil (3) übereinstimmt.

11. LED-Einheit (160) nach Anspruch 10,
wobei der Träger (4) oder das LED-Modul (2) in der LED-Einheit (160) derart positioniert ist, dass das optische Zentrum der lichtemittierenden Fläche des LED-Bauteils (190) auf der optischen Achse (z) der zumindest einen Linse (1) liegt.

12. LED-Einheit (160) nach einem der Ansprüche 6 bis 11,
wobei zumindest zwei Linsen (1) vorgesehen sind und wobei die Linsen (2) mittels einer Linsenbrücke (157) optisch gekoppelt sind.

13. LED-Einheit (160) nach einem der Ansprüche 6 bis 12,
wobei zumindest drei Linsen (1) vorgesehen sind, wobei zu jeder Linse (1) ein LED-Bauteil (3) auf dem LED-Modul (2) angeordnet ist und die Linsen (1) entweder in Reihe nebeneinander angeordnet sind oder in einem Dreieck angeordnet sind.

14. Oberteil (154) für LED-Einheit (160) gemäß einem der Ansprüche 6 bis 13, aufweisend zumindest drei Linsen (1) gemäß einem der Ansprüche 1 bis 5,
wobei die Linsen (1) entweder in Reihe nebeneinander angeordnet sind oder in einem Dreieck angeordnet sind.

15. Oberteil (154) gemäß Anspruch 14,
wobei die Linsen (1) mittels Linsenbrücken (157) verbunden sind.

16. Kettenanordnung von mehreren miteinander verbundenen LED-Einheiten (160) gemäß Ansprüchen 6 bis 13.

17. Lichtkasten, vorzugsweise zur Werbebeleuchtung, mit zumindest einer transparenten Frontseite, welcher durch wenigstens eine LED-Einheiten (160) gemäß Ansprüchen 6 bis 13 ausgeleuchtet wird.

18. Verfahren zum Herstellen einer LED-Einheiten (160) gemäß Ansprüchen 6 bis 13, wobei LED-Einheiten (160) ein Oberteil (154) mit zumindest einer Linse (1) und ein LED-Modul (2) mit zumindest einem LED-Bauteil (3) aufweist mit den Verfahrensschritten:
- Ausrichten des LED-Moduls (2) derart, dass die optische Achse (z') des LED-Bauteiles (3) mit der optischen Achse (z) der Linse (1) übereinstimmt; und
- Positionieren des Oberteils (154) auf dem LED-Modul (2).

19. Verfahren gemäß Anspruch 18,
wobei der Schritt des Ausrichtens mittels Positionierungselementen (42) auf dem LED-Modul (2) und/oder dem Oberteil (154) erfolgt.

20. Verfahren nach einem der Ansprüche 18 oder 19, wobei die LED-Leuchteneinheit (160) weiterhin ein Unterteil (155) aufweist, wobei in dem Unterteil (155) eine Unterteil-Kavität (151) vorhanden ist und in die Unterteil-Kavität (155) Stromleitungen (153) zur Ansteuerung des LED-Bauteiles (3) eingebracht sind und wobei anschließend die Unterteil-Kavität (155) vergossen wird.

## Claims

1. Lens (1) for an LED unit (160) having one or more LEDs for distributing the light generated by the LED,
comprising a light incidence side (5) and a light emergence side (6) relative to the LED,
**characterized in that** the light emergence side (6) comprises successively, starting from the optical axis (z) of the lens (1), a convex central region (7), a concave intermediate region (8), and a convex outer region (9).

2. Lens according to claim 1, wherein the lens consists of a transparent material.

3. Lens according to any of the preceding claims, wherein the lens contains scattering particles and/or no color conversion material or no phosphor material.

4. Lens according to any of the preceding claims, wherein the light emergence side (6) of the lens is at least partially processed mechanically, for example, roughened.

5. Lens according to any of the preceding claims, wherein the light incidence side (5) of the lens is smooth or is processed mechanically, for example, roughened.

6. LED unit (160) comprising an LED module (2) comprising at least one LED component (3) arranged thereupon, comprising at least one LED,
wherein for each LED component (3) a lens (1) according to any of the preceding claims is arranged on the LED module (2) such that an interior space (15) is formed between the LED component (3) and the respective lens (1).

7. LED unit (160) according to claim 6, wherein the LED component (3) is an LED package or an LED with a globe top.

8. LED unit (160) according to claim 6 or 7, wherein at least one LED component (3) comprises a blue LED and color conversion material, so that blue and color-converted light of a longer wavelength, for example yellow light, is incident on the light incidence side (5) of the corresponding lens (1).

9. The LED unit (160) according to any of claims 6 to 8, wherein the LED unit (160) comprises an upper part (154) and a lower part (155) wherein an LED module (2) is arranged between the upper part (154) and the lower part (155).

10. LED unit (160) according to any of claims 6 to 9, wherein at least one positioning element (42) is provided, which positions a carrier (4) or the LED module in such a way that the optical axis (z) of the at least one lens (1) coincides with the optical axis (z') of the at least one LED component (3).

11. LED unit (160) according to claim 10, wherein the carrier (4) or the LED module (2) is positioned in the LED unit (160) in such a way that the optical center of the light-emitting area of the LED component (190) lies on the optical axis (z) of the at least one lens (1).

12. LED unit (160) according to any of claims 6 to 11, wherein at least two lenses (1) are provided and wherein the lenses (2) are optically coupled by means of a lens bridge (157).

13. LED unit (160) according to any of claims 6 to 12, wherein at least three lenses (1) are provided, wherein for each lens (1), an LED component (3) is arranged on the LED module (2), and the lenses (1) are arranged either in a row beside one another or in a triangle.

14. Upper part (154) for the LED unit (160) according to any of claims 6 to 13, comprising at least three lenses (1) according to any of claims 1 to 5, wherein the lenses (1) are arranged either in a row beside one another or in a triangle.

15. Upper part (154) according to claim 14, wherein the lenses (1) are connected by means of lens bridges (157).

16. Chain arrangement of a plurality of LED units (160) connected to one another according to claims 6 to 13.

17. Light box, preferably for advertising illumination, having at least one transparent front side, which is illuminated by at least one LED unit (160) according to claims 6 to 13.

18. Method for producing an LED unit (160) according to claims 6 to 13, wherein the LED unit (160) comprises an upper part (154) having at least one lens (1) and an LED module (2) with at least one LED component (3), comprising the method steps:
- aligning the LED module (2) such that the optical axis (z') of the LED component (3) coincides with the optical axis (z) of the lens (1); and
- positioning the upper part (154) on the LED module (2).

19. Method according to claim 18, wherein the step of alignment takes place by means of positioning elements (42) on the LED module (2) and/or on the upper part (154).

20. Method according to any of claims 18 or 19, wherein the LED unit (160) further comprises a lower part (155), wherein a lower part cavity (151) is present in the lower part (155), and power lines (153) for driving the LED component (3) are introduced into the lower part cavity (155) and wherein the lower part cavity (155) is subsequently encapsulated.

## Revendications

1. Lentille (1) pour une unité à LED (160) comportant une ou plusieurs LED et destinée à diffuser la lumière générée par la LED, présentant un côté d'incidence (5) et un côté d'émergence de lumière (6) par rapport à la LED,
**caractérisée en ce que** le côté d'émergence de lumière (6) présente successivement, à partir de l'axe optique (z) de la lentille (1), une région centrale convexe (7), une région intermédiaire concave (8) et une région externe convexe (9).

2. Lentille selon la revendication 1, celle-ci étant constituée d'un matériau transparent.

3. Lentille selon l'une des revendications précédentes, celle-ci contenant des particules de diffusion et/ou ne contenant aucun matériau de conversion de couleur voire aucun matériau phosphorescent.

4. Lentille selon l'une des revendications précédentes, dont le côté d'émergence de lumière (6) est au moins partiellement usiné mécaniquement, par exemple dépoli.

5. Lentille selon l'une des revendications précédentes, dont le côté d'incidence de lumière (5) est lisse ou usiné mécaniquement, par exemple dépoli.

6. Unité à LED (160) présentant un module à LED (2) sur lequel est agencé au moins un composant LED (3) présentant au moins une LED, dans laquelle, pour chaque composant LED (3), une lentille (1) selon l'une des revendications précédentes est agencée sur le module à LED (2) respectif de manière à former un espace intérieur (15) entre le composant LED (3) et la lentille (1) respective.

7. Unité à LED (160) selon la revendication 6, dans laquelle le composant LED (3) est une LED SMD ou une LED à couvercle dit globe-top.

8. Unité à LED (160) selon la revendication 6 ou 7, dans laquelle au moins un composant LED (3) présente une LED bleue et un matériau de conversion de couleur, de sorte qu'une lumière bleue et à couleur convertie de longueur d'onde plus longue, par exemple une lumière jaune, frappe le côté d'incidence de lumière (5) de la lentille (1) correspondante.

9. Unité à LED (160) selon l'une des revendications 6 à 8, dans laquelle l'unité à LED (160) possède une partie supérieure (154) et une partie inférieure (155), un module à LED (2) étant disposé entre la partie supérieure (154) et la partie inférieure (155).

10. Unité à LED (160) selon l'une des revendications 6 à 9, dans laquelle est prévu au moins un élément de positionnement (42) permettant le positionnement d'un support (4) ou du module à LED de manière que l'axe optique (z) de l'au moins une lentille (1) coïncide avec l'axe optique (z') de l'au moins un composant LED (3).

11. Unité à LED (160) selon la revendication 10, dans laquelle le support (4) ou le module à LED (2) est positionné dans l'unité à LED (160) de manière que le centre optique de la surface électroluminescente du composant LED (190) se situe sur l'axe optique (z) de l'au moins une lentille (1).

12. Unité à LED (160) selon l'une des revendications 6 à 11, dans laquelle sont prévues au moins deux lentilles (1) et dans laquelle les lentilles (2) sont reliées optiquement à l'aide d'un pont de lentille (157).

13. Unité à LED (160) selon l'une des revendications 6 à 12, dans laquelle sont prévues au moins trois lentilles (1), un composant LED (3) étant agencé sur le module à LED (2) pour chaque lentille (1), les lentilles (1) étant soit disposées en rangée l'une à côté de l'autre, soit disposées de façon triangulaire.

14. Partie supérieure (154) d'unité à LED (160) selon l'une quelconque des revendications 6 à 13, présentant au moins trois lentilles (1) selon l'une quelconque des revendications 1 à 5, lesdites lentilles (1) étant soit disposées en rangée l'une à côté de l'autre, soit disposées de façon triangulaire.

15. Partie supérieure (154) selon la revendication 14, dans laquelle les lentilles (1) sont reliées au moyen de ponts de lentille (157).

16. Chaîne de plusieurs unités à LED (160) selon les revendications 6 à 13, celles-ci étant reliées entre elles.

17. Caisson lumineux, de préférence pour l'éclairage publicitaire, comportant au moins une face avant transparente éclairée par au moins une unité à LED (160) selon les revendications 6 à 13.

18. Procédé de fabrication d'une unité à LED (160) selon les revendications 6 à 13, dans lequel l'unité à LED (160) présente une partie supérieure (154) comportant au moins une lentille (1) et un module à LED (2) comportant au moins un composant LED (3), comprenant les étapes de procédé suivantes :
- mise en place du module à LED (2) de manière que l'axe optique (z') du composant LED (3) coïncide avec l'axe optique (z) de la lentille (1), et
- positionnement de la partie supérieure (154) sur le module à LED (2) .

19. Procédé selon la revendication 18, dans lequel l'étape de mise en place s'effectue à l'aide d'éléments de positionnement (42) présents sur le module à LED (2) et/ou sur la partie supérieure (154) .

20. Procédé selon l'une des revendications 18 et 19, dans lequel l'unité d'éclairage à LED (160) comprend en outre une partie inférieure (155), laquelle partie inférieure (155) présente une cavité (151), et des câbles d'alimentation (153) permettant de commander le composant LED (3) sont installés dans ladite cavité (155), ladite cavité (155) étant ensuite scellée.
